# EUROPÄISCHE PATENTANMELDUNG

(11) **EP 4 523 828 A1**
(43) Veröffentlichungstag der Anmeldung: **19.03.2025**
(21) Anmeldenummer: 24198591.0
(22) Anmeldetag: 05.09.2024
(51) Int. Cl.: B23K 9/28, B23K 9/10

(54) **FUNKTIONSWECHSELMODUL FÜR EINEN SCHWEISSBRENNER-PISTOLENGRIFF**

(30) Priorität: 08.09.2023 EP 23196147; 08.09.2023 EP 23196148
(71) Anmelder: EWM GmbH, 56271 Mündersbach (DE)
(72) Erfinder: König, Mario, 56412 Nentershausen (DE); Vetten, Adrian, 57629 Steinebach (DE)
(74) Vertreter: Cohausz & Florack

(57) **Zusammenfassung**

Die Erfindung betrifft ein System (101, 200, 300, 400) umfassend einen Pistolengriff (100) für einen Schweißbrenner (210) und ein Funktionswechselmodul (160, 360, 460), wobei der Pistolengriff (100) einen Pistolengriffkörper (104) aufweist und wobei das Funktionswechselmodul (160, 360, 460) durch eine Funktionswechselmodul-Öffnung (162) im Pistolengriffkörper (104) in eine im Pistolengriffkörper (104) vorgesehene Funktionswechselmodul-Aufnahme (164) eingesetzt und/oder einsetzbar ist. Die Erfindung betrifft weiter ein Funktionswechselmodul (160, 360, 460) für einen Pistolengriff (100) eines Schweißbrenners (210) sowie die Verwendung eines solchen Funktionswechselmoduls (160, 360, 460).

## Beschreibung

Die vorliegende Erfindung betrifft ein Funktionswechselmodul für einen Pistolengriff eines Schweißbrenners, eine Verwendung des Funktionswechselmoduls sowie ein System mit einem Pistolengriff für einen Schweißbrenner und einem Funktionswechselmodul.

Aus dem Stand der Technik sind Pistolengriffe für Schweißbrenner, insbesondere für Lichtbogenschweißbrenner, bekannt. Der Pistolengriff kann als Teil des Schweißbrenners, insbesondere einteilig mit der Schweißbrenner-Griffschale, oder als gesondertes Zubehörteil ausgebildet werden, dass an einen Schweißbrenner angeschraubt werden kann. Die Verwendung derartiger Pistolengriffe an einem Schweißbrenner hat den Vorteil, dass der Schweißbrenner sich in bestimmten Schweißsituationen besser handhaben lässt.

Unabhängig davon gibt es verschiedene Komponenten, die die Benutzung eines Lichtbogenschweißbrenners vereinfachen oder verbessern können.

Vor diesem Hintergrund liegt der vorliegenden Erfindung die Aufgabe zu Grunde, die Handhabung und Verwendung von Lichtbogenschweißbrennern zu vereinfachen und/oder verbessern.

Die zuvor genannte Aufgabe wird erfindungsgemäß gelöst durch ein System, das einen Pistolengriff für einen Schweißbrenner und ein Funktionswechselmodul umfasst, wobei der Pistolengriff einen Pistolengriffkörper aufweist und wobei das Funktionswechselmodul durch eine Funktionswechselmodul-Öffnung im Pistolengriffkörper in eine im Pistolengriffkörper vorgesehene Funktionswechselmodul-Aufnahme eingesetzt und/oder einsetzbar ist.

Durch das Vorsehen eines in den Pistolengriff einsetzbaren Funktionswechselmoduls kann der Pistolengriff bzw. ein mit dem Pistolengriff ausgestatteter Schweißbrenner bei Bedarf mit einer zusätzlichen Funktion ausgestattet werden. Insbesondere wird auf diese Weise ein Pistolengriff mit dem Funktionswechselmodul, insbesondere mit einer Funktionseinheit des Funktionswechselmoduls, bereitgestellt, so dass der Pistolengriff mit einer zusätzlichen Funktion ausgestattet ist.

Die zuvor genannte Aufgabe wird erfindungsgemäß entsprechend weiterhin gelöst durch ein Funktionswechselmodul für einen Pistolengriff eines Schweißbrenners, mit einem Schaft zum Einstecken in eine Funktionswechselmodul-Aufnahme eines Pistolengriffs und mit einer Funktionseinheit zur Ausstattung des Pistolengriffs mit einer Zusatzfunktion.

Weiterhin wird die zuvor genannte Aufgabe erfindungsgemäß gelöst durch die Verwendung des zuvor beschriebenen Funktionsmoduls zur Ausstattung eines Pistolengriffs für einen Schweißbrenner mit der Zusatzfunktion.

Das System umfasst einen Pistolengriff für einen Schweißbrenner. Der Pistolengriff kann als Teil eines Schweißbrenners ausgebildet sein. Beispielsweise kann der Pistolenkörper einteilig mit einer Schweißbrenner-Griffschale eines Schweißbrenners ausgebildet sein. Alternativ kann der Pistolengriff auch dazu ausgebildet sein, an einer Schweißbrenner-Griffschale und/oder an einem Schweißbrenner befestigt zu werden. Der Pistolengriff kann beispielsweise als separates Zubehör zu einem Schweißbrenner vorliegen, das bei Bedarf am Schweißbrenner bzw. der Schweißbrenner-Griffschale montiert werden kann.

Der Pistolengriff weist einen Pistolengriffkörper auf. Der Pistolengriffkörper kann zum Beispiel aus zwei miteinander verbundenen Halbschalen gebildet sein. Vorzugsweise ist der Pistolengriffkörper aus Kunststoff gebildet.

Der Pistolengriffkörper weist vorzugsweise eine Grifffläche zum Greifen des Pistolengriffs mit einer Hand auf. Vorzugsweise weist die Grifffläche eine hintere Teilfläche zur Positionierung des Handballens und/oder der Handfläche einer Hand und eine vordere Teilfläche zur Positionierung der Finger einer Hand auf. Die Grifffläche kann an eine bestimmungsgemäß vorgegebene Handausrichtung angepasst sein, beispielsweise Erhebungen und/oder Vertiefungen zur erleichterten bestimmungsgemäßen Positionierung ein oder mehrerer Finger an der Grifffläche aufweisen.

Der Pistolengriffkörper weist insbesondere ein oberes Ende auf, mit dem der Pistolengriffkörper mit einem Schweißbrenner verbunden oder verbindbar ist. Weiter weist der Pistolengriffkörper vorzugsweise ein dem oberen Ende gegenüberliegendes unteres Ende auf. Die Grifffläche ist vorzugsweise zwischen dem oberen Ende und dem unteren Ende des Pistolengriffkörpers angeordnet.

Der Pistolengriffkörper weist eine Funktionswechselmodul-Öffnung auf, durch die das Funktionswechselmodul in die im Pistolengriffkörper vorgesehene Funktionswechselmodul-Aufnahme eingesetzt und/oder einsetzbar ist. Die Funktionswechselmodul-Öffnung ist vorzugsweise im Bereich des unteren Endes des Pistolengriffkörpers angeordnet. Auf diese Weise kann das Funktionswechselmodul einfacher in die Funktionswechselmodul-Aufnahme eingesetzt werden, ohne vom Schweißbrenner behindert zu werden. Darüber hinaus erlaubt der dadurch bewirkte Abstand zwischen Funktionswechselmodul-Öffnung und Schweißbrenner abhängig von der Funktionalität des Funktionswechselmoduls eine bessere Funktionsweise.

Das System umfasst weiter ein Funktionswechselmodul. Das Funktionswechselmodul dient dazu, den Pistolengriffkörper mit einer Funktionalität auszurüsten. Zu diesem Zweck weist das Funktionswechselmodul vorzugsweise eine Funktionseinheit zur Ausstattung des Pistolengriffs mit einer Zusatzfunktion auf. Das Funktionswechselmodul kann insbesondere ein Funktionswechselmodulgehäuse aufweisen, in dem die Funktionseinheit teilweise oder vollständig angeordnet ist.

Das Funktionswechselmodul ist durch die Funktionswechselmodul-Öffnung im Pistolengriffkörper in die im Pistolengriffkörper vorgesehene Funktionswechselmodul-Aufnahme eingesetzt und/oder einsetzbar. Zu diesem Zweck kann das Funktionswechselmodul, insbesondere das FunktionswechselmodulGehäuse, einen Schaft zum Einstecken in die Funktionswechselmodul-Aufnahme aufweisen. Insbesondere kann der Schaft eine an die Funktionswechselmodul-Aufnahme, insbesondere an deren Innenkontur, angepasste Außenkontur aufweisen.

Das Funktionswechselmodul ist vorzugsweise lediglich in einer vorgegebenen Ausrichtung in die Funktionswechselmodul-Aufnahme einsteckbar. Auf diese Weise wird die richtige Montage des Funktionswechselmoduls erleichtert. Zu diesem Zweck kann der Schaft des Funktionswechselmoduls insbesondere einen Querschnitt mit einer entsprechenden Asymmetrie aufweisen.

Das Funktionswechselmodul kann einen Kopf aufweisen, der dazu vorgesehen ist, bei bis zum Anschlag in die Funktionswechselmodul-Aufnahme eingestecktem Funktionsmodul außerhalb der Funktionswechselmodul-Aufnahme angeordnet zu sein, insbesondere außerhalb der Funktionswechselmodul-Öffnung. Der Kopf kann insbesondere die Funktionseinheit oder Teile davon umfassen. Auf diese Weise kann der Abstand der Funktionseinheit vom Schweißbrenner erhöht werden, was für manche Funktionen vorteilhaft ist. Darüber hinaus können auf diese Weise größere Funktionseinheiten verwendet werden, für die der Platz innerhalb der Funktionswechselmodul-Aufnahme zu gering wäre.

Im Folgenden werden verschiedene Ausführungsformen des Funktionswechselmoduls, dessen Verwendung und des Systems beschrieben, wobei die einzelnen Ausführungsformen jeweils unabhängig voneinander für das Funktionswechselmodul, für dessen Verwendung und für das System gelten. Darüber hinaus können die einzelnen Ausführungsformen beliebig miteinander kombiniert werden.

Bei einer Ausführungsform umfasst das System eine Schweißbrenner-Griffschale und/oder einen Schweißbrenner, an dem der Pistolengriff montierbar oder montiert ist. Der Pistolengriff kann insbesondere als Teil des Schweißbrenners ausgebildet sein oder dazu ausgebildet sein, an der Schweißbrenner-Griffschale und/oder am Schweißbrenner befestigt zu werden. Der Schweißbrenner ist insbesondere ein Handschweißbrenner.

Bei dem Schweißbrenner handelt es sich vorzugsweise um einen Schweißbrenner für das Lichtbogenschweißen, insbesondere für das Metall-Schutzgas-Schweißen (MSG-Schweißen), beispielsweise Metall-Inertgas-Schweißen (MIG-Schweißen) oder Metall-Aktivgas-Schweißen (MAG-Schweißen). Bei der Schweißbrenner-Griffschale handelt es sich vorzugsweise um eine Schweißbrenner-Griffschale für einen solchen Schweißbrenner.

Bei einer Ausführungsform weisen der Pistolengriff und das Funktionswechselmodul komplementäre Funktionswechselmodul-Befestigungsmittel auf, die dazu ausgebildet sind, das Funktionswechselmodul in der Funktionswechselmodul-Aufnahme des Pistolengriffs zu befestigen, insbesondere formschlüssig. Auf diese Weise kann das Funktionswechselmodul sicher in der Funktionswechselmodul-Aufnahme gehalten werden.

Die Funktionswechselmodul-Befestigungsmittel können vorzugsweise einen Haken, beispielsweise am Funktionswechselmodul und eine korrespondierende hinterschnittene Gegenfläche, beispielsweise am Pistolengriffkörper, umfassen. Die Funktionswechselmodul-Befestigungsmittel sind vorzugsweise werkzeuglos verriegelbar und/oder entriegelbar. Beispielsweise kann ein von den Funktionswechselmodul-Befestigungsmitteln umfasster Haken über eine manuell betätigbare Betätigungsfläche entriegelbar sein. Vorzugsweise ist ein Federelement vorgesehen, das den Haken federbelastet, vorzugsweise eine zur verriegelten Stellung des Hakens gerichtete Kraft auf den Haken ausübt.

Bei einer Ausführungsform weist das Funktionswechselmodul eine eigene Spannungsversorgung, insbesondere eine Batterie oder einen Akkumulator, auf. Auf diese Weise kann das Funktionswechselmodul den Pistolengriff mit einer Funktion ausstatten, die einer elektrischen Versorgung bedarf, ohne dass eine elektrische Verbindung bzw. elektrische Kontaktierung des Funktionswechselmoduls zur elektrischen Versorgung des Funktionswechselmoduls durch den Schweißbrenner erforderlich wäre. Auf diese Weise können die Funktionswechselmodule universeller eingesetzt werden, insbesondere ohne auf eine Spannungsversorgung vom Schweißbrenner angewiesen zu sein. Die Spannungsversorgung kann insbesondere zur Versorgung der Funktionseinheit eingerichtet sein.

Bei einer Ausführungsform weist das Funktionswechselmodul ein oder mehrere Lichtquellen, insbesondere LEDs, auf, die zur Ausleuchtung eines Arbeitsbereichs angeordnet sind, insbesondere eines Arbeitsbereichs des Schweißbrenners. Insbesondere kann die Funktionseinheit die ein oder mehrere Lichtquellen umfassen. Manche Schweißbrenner weisen zwar bereits eine Lichtquelle zur Ausleuchtung des Arbeitsbereichs des Schweißbrenners auf. Diese Lichtquellen befinden sich jedoch aufgrund der Form des Schweißbrenners recht nah an der Schweißbrennerachse bzw. am Schweißbrennergehäuse, so dass es zu Abschattungen durch den Schweißbrenner kommt. Dies ist insbesondere an Einsatzorten, beispielsweise im Schiffsbau, problematisch. Durch das Vorsehen ein oder mehrerer Lichtquellen am Funktionswechselmodul, insbesondere an einem Kopf des Funktionswechselmoduls, können diese den Arbeitsbereich durch den größeren Abstand zum Schweißbrenner selbst besser ausleuchten und ermöglichen damit ein komfortableres und sichereres Arbeiten.

Die ein oder mehreren Lichtquellen sind insbesondere derart angeordnet, dass sie bei in den Pistolengriff eingestecktem Funktionswechselmodul und bei am Schweißbrenner befestigtem Pistolengriff in Richtung des Schweißbereichs und/oder des Arbeitsendes, insbesondere des Auslasses, des Schweißbrenners gerichtet sind.

Bei einer Ausführungsform weist das Funktionswechselmodul ein Lesegerät zum Lesen einer Kennung auf, insbesondere einen Barcode- und/oder QR-Scanner oder ein RFID-Lesegerät. Insbesondere kann die Funktionseinheit das Lesegerät umfassen. Auf diese Weise können mit dem Funktionswechselmodul beispielsweise Barcodes bzw. QR-Codes oder RFID-Tags an einem Werkstück ausgelesen werden, beispielsweise um Informationen über das Werkstück, beispielsweise eine Werkstückkennung, und/oder über an dem Werkstück durchzuführende Schweißvorgänge zu erhalten.

Bei einer Ausführungsform weist das Funktionswechselmodul ein optisches Erfassungsgerät zum Erfassen eines Werkstücks, insbesondere einen 3D-Scanner, auf. Insbesondere kann die Funktionseinheit das optische Erfassungsgerät umfassen. Auf diese Weise können mit dem Funktionswechselmodul zum Beispiel die Geometrie eines Werkstücks oder die Anordnung mehrerer Werkstücke zueinander erfasst werden.

Bei einer Ausführungsform weist das Funktionswechselmodul ein oder mehreren Sensoren auf, insbesondere zur Erfassung von Messdaten in einem Arbeitsbereich, insbesondere eines Arbeitsbereichs des Schweißbrenners. Insbesondere kann die Funktionseinheit die ein oder mehreren Sensoren umfassen. Auf diese Weise können zusätzliche Daten, beispielsweise Schweißdaten, erhoben werden, deren Erfassung mit dem Schweißbrenner selbst nicht vorgesehen oder möglich ist. Weiterhin ermöglicht das Funktionswechselmodul einen größeren Abstand der ein oder mehreren Sensoren vom Schweißbrenner selbst, was für manche Sensoren vorteilhaft ist, da diese zum Beispiel durch den Schweißbrenner weniger in der Datenerfassung behindert werden.

Bei einer Ausführungsform umfasst das Funktionswechselmodul eine Steuereinrichtung zur Steuerung des Funktionswechselmoduls und eine Kommunikationseinrichtung zur drahtlosen Kommunikation, wobei die Steuereinrichtung dazu eingerichtet ist, ein Senden von mit dem Funktionswechselmodul erfassten Daten über die Kommunikationseinrichtung zu veranlassen. Bei den Daten kann es sich insbesondere um Daten handeln, die mit einem optischen Erfassungsgerät und/oder mit einem Lesegerät und/oder mit ein oder mehreren Sensoren des Funktionswechselmoduls erfasst und optional im Funktionswechselmodul weiterverarbeitet wurden. Auf diese Weise kann das Funktionswechselmodul die erfassten Daten beispielsweise an eine Steuereinrichtung einer Schweißstromquelle, an die der Schweißbrenner angeschlossen ist, oder an einen Server senden. Die Steuereinrichtung der Schweißstromquelle bzw. der Server können die Daten dann beispielsweise auswerten, um ein Auswerteergebnis zu erhalten und die Schweißstromquelle abhängig von dem Auswerteergebnis steuern.

Beispielsweise können über die Kommunikationseinrichtung aus einem Barcode oder QR-Code oder RFID-Tag ausgelesene Daten über ein Werkstück oder an einen an dem Werkstück durchzuführenden Schweißvorgang übermittelt werden, so dass zum Beispiel eine die Daten erhaltende Steuereinrichtung der Schweißstromquelle die Schweißparameter der Schweißstromquelle automatisch konfigurieren kann. Bei Übermittelung von Sensordaten über die Kommunikationseinrichtung kann zum Beispiel ein laufender Schweißprozess überwacht und/oder protokolliert werden.

Bei einer Ausführungsform umfasst das Funktionswechselmodul eine Steuereinrichtung zur Steuerung des Funktionswechselmoduls und eine Kommunikationseinrichtung zur drahtlosen Kommunikation, wobei die Steuereinrichtung dazu eingerichtet ist, das Funktionswechselmodul abhängig von über die Kommunikationseinrichtung empfangenen Steuerbefehlen zu steuern. Auf diese Weise kann das Funktionswechselmodul zum Beispiel durch eine am Schweißbrenner oder an der Schweißstromquelle vorgesehene Nutzerschnittstelle gesteuert werden, beispielsweise um am Funktionswechselmodul vorgesehene ein oder mehrere Lichtquellen an- oder auszuschalten oder die Durchführung von Datenerfassungen mit einem am Funktionswechselmodul vorgesehenen Lesegerät, optischen Erfassungsgerät oder Sensor zu bewirken. Weiterhin ist eine automatische Steuerung durch eine Steuereinrichtung der Schweißstromquelle denkbar.

Die Steuereinrichtung umfasst vorzugsweise mindestens einen Mikroprozessor und mindestens einen Speicher mit Befehlen, deren Ausführung auf dem Mikroprozessor die Steuerung Funktionswechselmoduls bewirkt.

Die Kommunikationseinrichtung kann beispielsweise zur drahtlosen Kommunikation über Bluetooth oder WLAN ausgebildet sein.

Bei einer Ausführungsform weist das Funktionswechselmodul einen Magneten auf, der dazu ausgebildet und angeordnet ist, den Pistolengriff bei eingestecktem Funktionswechselmodul an einem magnetischen Gegenstand zu halten. Der Magnet ist zu diesem Zweck vorzugsweise an einem Ende des Funktionswechselmoduls angeordnet, das bei in die Funktionswechselmodul-Aufnahme eingestecktem Funktionswechselmodul im Bereich der Funktionswechselmodul-Öffnung oder außerhalb der Funktionswechselmodul-Öffnung, insbesondere am Kopf des Funktionswechselmoduls, angeordnet ist. Der Magnet ist vorzugsweise im Bereich einer flachen Anlagefläche des Funktionswechselmoduls angeordnet, die zur Anlage an eine flache Oberfläche eines Werkstücks vorgesehen ist.

Bei einer Ausführungsform umfasst das System ein oder mehrere weitere Funktionswechselmodule, die jeweils zum Einstecken in die Funktionswechselmodul-Aufnahme ausgebildet sind, wobei das Funktionswechselmodul und die ein oder mehreren weiteren Funktionswechselmodule verschiedenartig ausgebildet sind, insbesondere verschiedenartige Zusatzfunktionen bereitstellen. Insbesondere können das Funktionswechselmodul und die ein oder mehreren weiteren Funktionswechselmodule verschiedenartige Funktionseinheiten aufweisen.

Auf diese Weise wird ein Wechselsystem zur Verfügung gestellt, bei dem der Nutzer den Pistolengriff bzw. den Schweißbrenner durch Einstecken des jeweiligen Funktionswechselmoduls mit einer gewünschten Zusatzfunktion ausstatten kann. Beispielsweise kann das Funktionswechselmodul ein oder mehrere Lichtquellen und eines der ein oder mehreren weiteren Funktionswechselmodule stattdessen oder zusätzlich einen Barcodescanner aufweisen.

Bei einer Ausführungsform ist das Funktionswechselmodul derart ausgebildet, dass das Funktionswechselmodul, wenn es in die Funktionswechselmodul-Aufnahme eingesetzt ist, die Funktionswechselmodul-Öffnung verschließt. Auf diese Weise kann das Eindringen von Staub oder Dämpfen verhindert werden. Beispielsweise kann das Funktionswechselmodul einen Funktionswechselmodul-Deckel aufweisen, der die Funktionswechselmodul-Öffnung bei in die Funktionswechselmodul-Aufnahme eingesetztem Funktionswechselmodul verschließt. Weist das Funktionswechselmodul einen Kopf auf, so kann auch dieser zum Verschließen der Funktionswechselmodul-Öffnung ausgebildet sein.

Bei einer Ausführungsform weist der Pistolengriff eine Montagekontur zur Montage des Pistolengriffs an einem Schweißbrenner, insbesondere einer Schweißbrenner-Griffschale, auf. Auf diese Weise kann ein separat vom Schweißbrenner ausgebildeter Pistolengriff zu dessen Montage am Schweißbrenner bzw. an der Schweißbrenner-Griffschale angeordnet werden. Insbesondere kann die Montagekontur durch einen oberen Bereich am oberen Ende des Pistolengriffkörpers gebildet werden.

Vorzugsweise weist der Pistolengriff Befestigungsmittel zur werkzeuglosen Befestigung des Pistolengriffs an einem Schweißbrenner, insbesondere einer Schweißbrenner-Griffschale, auf. Auf diese Weise kann der Pistolengriff schnell und einfach bei Bedarf am Schweißbrenner montiert bzw. wieder abgenommen werden. Insbesondere kann der Pistolengriff eine manuell betätigbare Befestigungsbetätigung zum Entriegeln und/oder Verriegeln der Befestigungsbetätigung aufweisen. Die Befestigungsmittel können zum Beispiel ein oder mehrere Formschlusselemente zur formschlüssigen Befestigung des Pistolengriffs an einem Schweißbrenner umfassen.

Die Befestigungsmittel können insbesondere derart ausgebildet sein, dass der Pistolengriff aus einer Montagezwischenstellung, in der erste Befestigungselemente der Befestigungsmittel in Eingriff sind, durch eine Schwenkbewegung, bei der zweite Befestigungselemente der Befestigungsmittel in Eingriff kommen, am Schweißbrenner bzw. an der Schweißbrenner-Griffschale befestigt werden kann.

Bei einer Ausführungsform weist der Pistolengriff eine manuell betätigbare Brennertasterbetätigung auf, die dazu ausgebildet ist, eine Betätigung der Brennertasterbetätigung zu übertragen, insbesondere auf einen Brennertaster eines Schweißbrenners, wenn der Pistolengriff an dem Schweißbrenner montiert ist.

Vorzugsweise sind die Befestigungsbetätigung und/oder die Brennertasterbetätigung derart zur Grifffläche angeordnet, dass die Befestigungsbetätigung und/oder die Brennertasterbetätigung mit einer Hand betätigbar sind, insbesondere mit einer Hand, die den Pistolengriff an der Grifffläche ergriffen hat. Auf diese Weise wird die Handhabung vereinfacht. Die Brennertasterbetätigung kann beispielsweise im Bereich einer vorderen Teilfläche der Grifffläche angeordnet sein. Die Befestigungsbetätigung kann beispielsweise im Bereich einer hinteren Teilfläche der Grifffläche angeordnet sein.

Bei einer Ausführungsform weist das Funktionswechselmodul ein Magazin auf, das zur Aufnahme von Zubehör ausgebildet ist. Insbesondere kann der Schaft des Funktionswechselmoduls als Magazin zur Aufnahme von Zubehör ausgebildet sein. Auf diese Weise kann im Pistolengriffkörper Zubehör untergebracht werden, das somit bei Bedienung des Schweißbrenners unmittelbar zur Verfügung steht. Bei dem Zubehör kann es sich beispielsweise um Werkzeug, insbesondere einen Brennerschlüssel, und/oder um Ersatzteile, insbesondere von Verschleißteilen des Schweißbrenners, handeln. Auf diese Weise können manuelle Einstellungen bzw. Reparaturen am Brenner schnell und einfach direkt vor Ort mit dem richtigen Werkzeug bzw. den richtigen Ersatzteilen durchgeführt werden. Das Funktionswechselmodul kann insbesondere als Magazin ausgebildet sein. Bei der Funktionswechselmodul-Öffnung kann es sich entsprechend um eine Magazinöffnung und bei der Funktionswechselmodul-Aufnahme um eine Magazinaufnahme handeln.

Bei einer Ausführungsform weist das Funktionswechselmodul eine Funktionseinheit auf, die kein zur Aufnahme von Zubehör ausgebildetes Magazin, vorzugsweise kein Magazin, ist. Das Funktionswechselmodul kann auch eine Funktionseinheit, die kein zur Aufnahme von Zubehör ausgebildetes Magazin, vorzugsweise kein Magazin, ist, und zusätzlich ein Magazin, vorzugsweise ein zur Aufnahme von Zubehör ausgebildetes Magazin, aufweisen.

Weitere Merkmale und Vorteile des Funktionswechselmoduls, dessen Verwendung und des Systems ergeben sich aus der nachfolgenden Beschreibung von Ausführungsbeispielen, wobei auf die beigefügte Zeichnung Bezug genommen wird.

In der Zeichnung zeigen
- Fig. 1a-d: ein erstes Ausführungsbeispiel des Systems, des Funktionswechselmoduls und dessen Verwendung,
- Fig. 2a-b: die Montage des Pistolengriffs an einem Schweißbrenner beim System aus Fig. 1a-d,
- Fig. 3: ein weiteres Ausführungsbeispiel des Systems, des Funktionswechselmoduls und dessen Verwendung und
- Fig. 4: ein weiteres Ausführungsbeispiel des Systems, des Funktionswechselmoduls und dessen Verwendung.

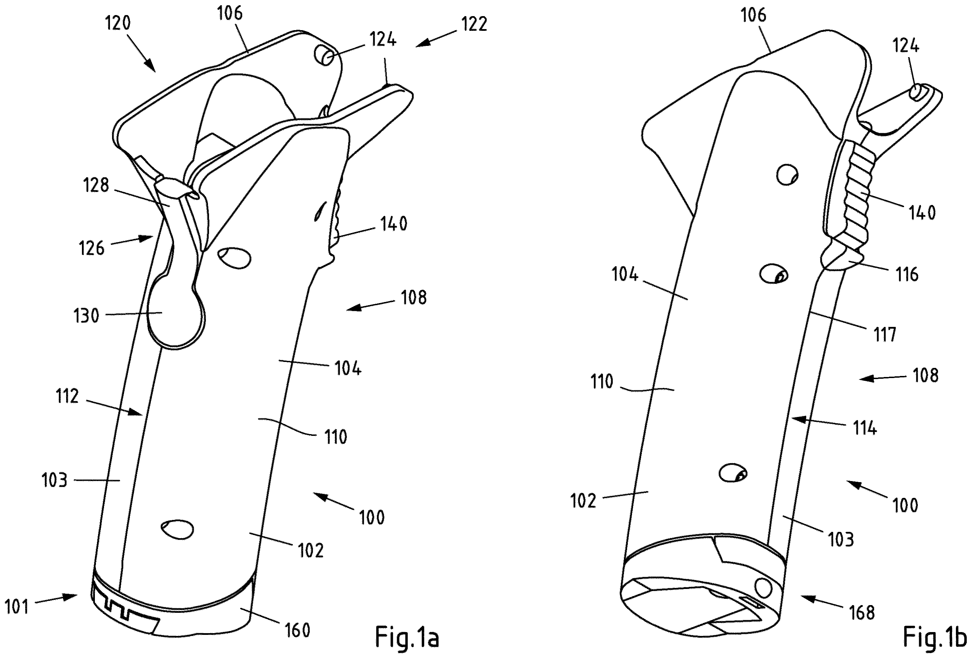

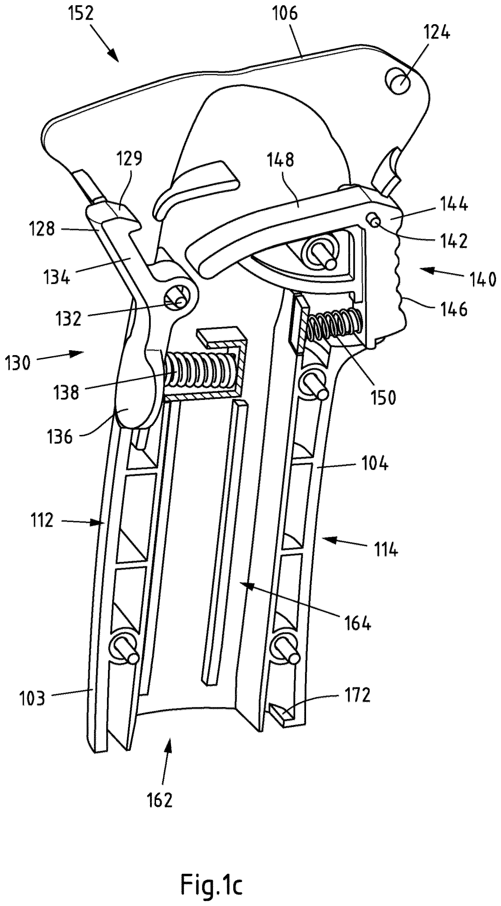

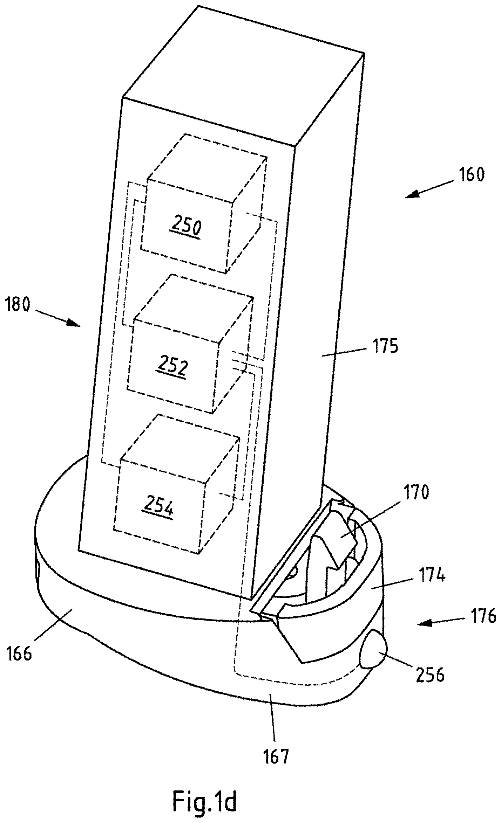

Die Fig. 1a-d zeigen ein Ausführungsbeispiel des Systems und des Funktionswechselmoduls in verschiedenen Ansichten. Das System 101 umfasst einen Pistolengriff 100 und ein Funktionswechselmodul 160. Fig. 1a und Fig. 1b zeigen den Pistolengriff 100 des Systems 101 in perspektivischen Seitenansichten von schräg oben (Fig. 1a) und schräg unten (Fig. 1b) mit eingesetztem Funktionswechselmodul 160. Fig. 1c zeigt eine perspektivische Teilansicht des Pistolengriffs 100 mit ausgeblendeter Halbschale 102 ohne Funktionswechselmodul 160 und Fig. 1d zeigt das Funktionswechselmodul 160 in schematischer perspektivischer Ansicht.

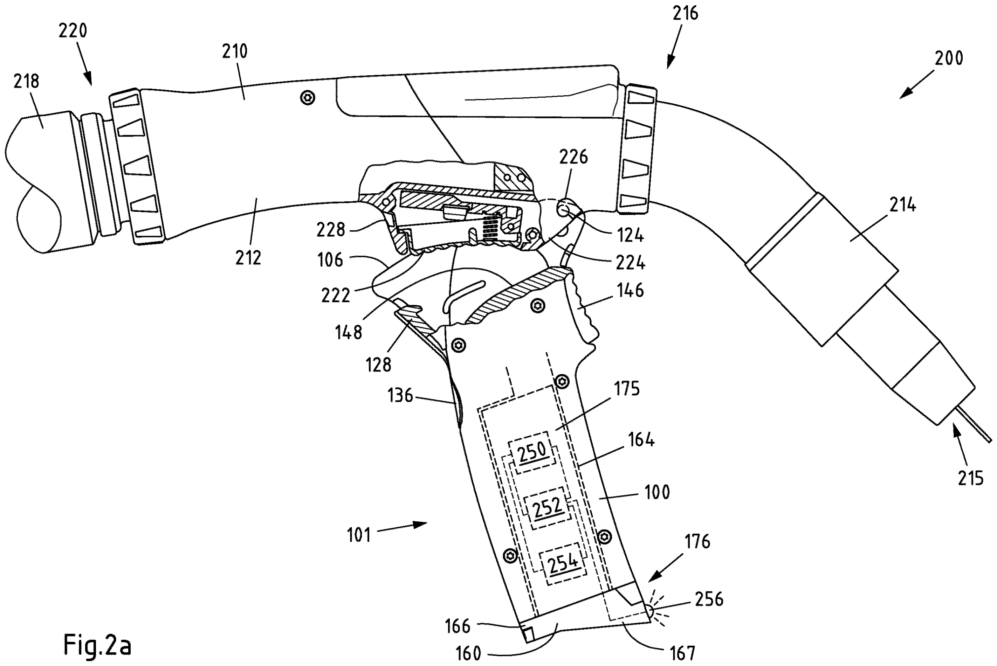

Der Pistolengriff 100 weist einen aus zwei miteinander verschraubten KunststoffHalbschalen 102, 103 gebildeten Pistolengriffkörper 104 auf. Der Pistolengriffkörper 104 weist an einer Oberseite eine Montagekontur 106 zur Montage des Pistolengriffs 100 an einem Schweißbrenner, insbesondere einer Schweißbrenner-Griffschale, auf, beispielsweise am Schweißbrenner 210 bzw. der Schweißbrenner-Griffschale 212 aus Fig. 2a-b.

Unterhalb der Montagekontur 106 weist der Pistolengriffkörper 104 einen Griffbereich 108 mit einer Grifffläche 110 zum Greifen des Pistolengriffs 100 mit einer Hand auf. Die Grifffläche 110 weist eine hintere Teilfläche 112 zur Positionierung der Handfläche und/oder des Handballens einer Hand und eine vordere Teilfläche 114 zur Positionierung der Finger der Hand auf. An der vorderen Teilfläche 114 sind Erhebungen 116 und Vertiefungen 117 vorgesehen, die die richtige Positionierung der Hand am Pistolengriff 100 erleichtern.

Der Pistolengriff 100 weist, im Bereich der Montagekontur 106, weiter Befestigungsmittel 120 zur werkzeuglosen Befestigung des Pistolengriffs an einem Schweißbrenner, beispielsweise am Schweißbrenner 210 (s. Fig. 2a-b), insbesondere an einer Schweißbrenner-Griffschale, beispielsweise der Schweißbrenner-Griffschale 212 (s. Fig. 2a-b), auf. Die Befestigungsmittel 120 umfassen erste Befestigungselemente 122 in Form von Achsenelementen 124 sowie ein zweites Befestigungselement 126 in Form eines Hakens 128.

Der Pistolengriff 100 weist weiter eine Befestigungsbetätigung 130 in Form eines um eine Achse 132 am Pistolengriffkörper 104 schwenkbar gelagerten Befestigungsbetätigungshebels 134 auf. Der Befestigungsbetätigungshebel 134 weist an einer Hebelseite eine Betätigungsfläche 136 zur manuellen Betätigung und an der anderen Hebelseite den Haken 128 auf. Weiter ist eine am Pistolengriffkörper 104 gelagerte Feder 138 vorgesehen, die auf den Befestigungsbetätigungshebel 134 und damit auf den Haken 128 eine Federkraft in Richtung der Verriegelungsstellung des Hakens 128 ausübt. Die Betätigungsfläche 136 ist im Bereich der hinteren Teilfläche 112 der Grifffläche 110 angeordnet. Dies ermöglicht einen einfachen Zugriff auf die Betätigungsfläche 136 und verhindert gleichzeitig eine versehentliche Betätigung der Betätigungsfläche 136 durch Finger einer den Pistolengriff 100 greifenden Hand, die bei bestimmungsgemäßer Positionierung im Bereich der vorderen Teilfläche 114 anliegen.

Der Pistolengriff 100 weist weiter eine Brennertasterbetätigung 140 in Form eines um eine Achse 142 am Pistolengriffkörper 104 schwenkbar gelagerten Brennertasterbetätigungshebels 144 auf. Der Brennertasterbetätigungshebel 144 weist an einer Hebelseite eine Betätigungsfläche 146 zur manuellen Betätigung und an der anderen Hebelseite eine Aktuatorfläche 148 zur Betätigung eines Brennertasters am Schweißbrenner bzw. an der Schweißbrenner-Griffschale auf. Weiter ist eine am Pistolengriffkörper 104 gelagerte Feder 150 vorgesehen, die auf den Brennertasterbetätigungshebel 144 und damit auf die Aktuatorfläche 148 eine Federkraft in Richtung der unbetätigten Stellung ausübt. Die Betätigungsfläche 146 ist im Bereich der vorderen Teilfläche 114 der Grifffläche 110 angeordnet, und zwar in einem zur Anlage des Zeigefingers einer Hand vorgesehenen Bereich der Teilfläche 114. Dies ermöglicht eine einfache Bedienung des Schweißbrenners durch eine den Pistolengriff 100 greifende Hand.

Das System 101 weist weiter ein Funktionswechselmodul 160 auf, das durch eine Funktionswechselmodul-Öffnung 162 in eine im Pistolengriffkörper 104 angeordnete Funktionswechselmodul-Aufnahme 164 einsetzbar ist. Das Funktionswechselmodul 160 weist einen Funktionswechselmodul-Deckel 166 auf, der die Funktionswechselmodul-Öffnung 162 verschließt, wenn das Funktionswechselmodul 160 in die Funktionswechselmodul-Aufnahme 164 eingesetzt ist. Fig. 1d zeigt eine perspektivische Ansicht des Funktionswechselmoduls 160. Am Funktionswechselmodul-Deckel 166 und am Pistolengriffkörper 104 sind zueinander komplementäre Funktionswechselmodul-Befestigungsmittel 168 in Form eines Hakens 170 am Funktionswechselmodul-Deckel 166 (s. Fig. 1d) und einer korrespondierenden Hinterschneidung 172 (s. Fig. 1c) am Pistolengriffkörper 104 vorgesehen, um das Funktionswechselmodul in der Funktionswechselmodul-Aufnahme 164 zu befestigen. Die Funktionswechselmodul-Befestigungsmittel 168 sind werkzeuglos betätigbar. Zu diesem Zweck ist am Funktionswechselmodul-Deckel 166 eine manuell bedienbare Betätigungsfläche 174 vorgesehen, mit der der Haken 170 und die Hinterschneidung 172 außer Eingriff gebracht werden können, um das Funktionswechselmodul 160 aus der Funktionswechselmodul-Aufnahme 164 zu entnehmen. Der Haken 170 und die Betätigungsfläche 174 sind derart elastisch ausgebildet, dass auf den Haken 170 eine Federkraft in Richtung einer verriegelten Stellung des Hakens 170 wirkt.

Das Funktionswechselmodul 160 weist einen Schaft 175 zum Einstecken in die Funktionswechselmodul-Aufnahme 164 aus, das vorliegend in Form eines Gehäuses ausgebildet ist. In dem Innengehäuse 175 ist eine Spannungsversorgung 250 in Form einer auswechselbaren Batterie oder eines Akkumulators, eine Steuereinrichtung 252 und eine Kommunikationseinrichtung 254 untergebracht. Die Kommunikationseinrichtung 254 ist zur drahtlosen Kommunikation, zum Beispiel mit einer korrespondierenden Kommunikationseinrichtung im Schweißbrenner 210 (s. Fig. 2a-b) oder in einer Schweißstromquelle, an die der Schweißbrenner 210 angeschlossen ist, eingerichtet.

Der Funktionswechselmodul-Deckel 166 weist einen nach unten vorstehenden Gehäuseteil 167 auf, in dem ein oder mehrere Lichtquellen 256, insbesondere in Form von Leuchtdioden, untergebracht sind. Der Funktionswechselmodul-Deckel 166 mit dem Gehäuseteil 167 bilden den Kopf 176 des Funktionswechselmoduls 160.

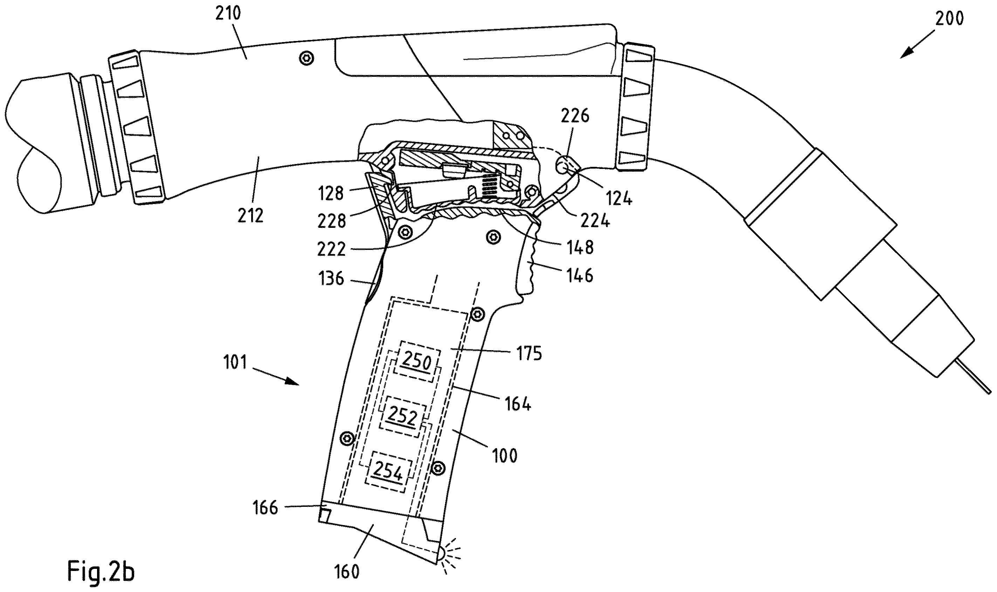

Die Lichtquellen 256 sind so angeordnet, dass sie nach Montage des Pistolengriffs 100 am Schweißbrenner 210 und Montage des Funktionswechselmoduls 160 im Pistolengriff 100 nach vorne in Richtung Auslass 215 des Schweißbrenners 210 gerichtet sind (s. Fig. 2b). Auf diese Weise kann mit dem Schweißbrenner 210 zum Beispiel ein Arbeitsbereich ausgeleuchtet werden, in dem ein Schweißprozess durchgeführt werden soll, was die Schweißarbeit in dunkler Umgebung, zum Beispiel im Schiffsbau, erheblich erleichtert.

Die Steuereinrichtung 252 kann beispielsweise dazu eingerichtet sein, die Lichtquellen 256 bei Empfang eines entsprechenden Steuerbefehls über die Kommunikationseinrichtung 254 an- oder auszuschalten. Auf diese Weise können die Lichtquellen 256 beispielsweise über den Schweißbrenner 210 oder die Schweißstromquelle drahtlos an- und/oder ausgeschaltet werden.

Das Funktionswechselmodul 160 kann auch ein Bedienelement, beispielsweise einen Schalter, aufweisen, mit dem die Lichtquellen 256 ein- bzw. ausgeschaltet werden können. Bei einer einfacheren Variante des Funktionswechselmoduls 160 mit einem solchen Bedienelement kann auch auf die Kommunikationseinrichtung 254 und ggf. auf die Steuereinrichtung 252 verzichtet werden.

Durch ein in den Pistolengriff 100 einsetzbares Funktionswechselmodul 160 mit Lichtquellen 256 kann der Schweißbrenner 210 flexibel mit den Lichtquellen 256 nachgerüstet werden. Die Positionierung der Lichtquellen 256 am unteren Ende des Pistolengriffs 100 ist für die Ausleuchtung des zu schweißenden Bereichs zudem besser geeignet als unmittelbar am Schweißbrenner 210 vorgesehene Lichtquellen, deren Lichtkegel durch den Schweißbrenner 210 selbst recht stark abgeschattet wird.

Die eigene Spannungsversorgung 250 im Funktionswechselmodul 160 macht zudem eine Spannungsversorgung über den Schweißbrenner 210 und damit das Vorsehen entsprechender Leitungen bzw. Kontakte entbehrlich. Auf diese Weise kann das Funktionswechselmodul 160 mit einer Vielzahl verschiedener Schweißbrenner 210 verwendet werden.

Die Lichtquellen 256, die Spannungsversorgung 250, die Steuereinrichtung 252, die Kommunikationseinrichtung 254 bzw. das ggf. vorgesehene Bedienelement stellen zusammen eine Funktionseinheit 180 des Funktionswechselmoduls 160 dar, die den Pistolengriff 100 mit einer Zusatzfunktion, nämlich einer zuschaltbaren Beleuchtung für den Arbeitsbereich, ausstatten.

Die Fig. 2a-b zeigen ein Ausführungsbeispiel des Systems in verschiedenen Anordnungen des Pistolengriffs 100 und eines Schweißbrenners 210 zueinander. Das System 200 umfasst die Bestandteile des Systems 101, d.h. den Pistolengriff 100 und das Funktionswechselmodul 160, sowie den Schweißbrenner 210. Fig. 2a und Fig. 2b zeigen Teilschnittansichten des Systems 200, wobei der Pistolengriff 100 und der Schweißbrenner 210 in Fig. 2a in einer Montagezwischenstellung und in Fig. 2b in einer Montageendstellung miteinander verbunden sind. Das Funktionswechselmodul 160 ist in den Pistolengriff 100 eingesetzt.

Das System 200 umfasst den Pistolengriff 100 aus Fig. 1a-e, das Funktionswechselmodul 160 sowie einen Schweißbrenner 210, der eine Schweißbrenner-Griffschale 212, einen Brennervorsatz 214 an einer vordere Seite 216 der Schweißbrenner-Griffschale 212 sowie ein Schlauchpaket 218 an einer hinteren Seite 220 der Schweißbrenner-Griffschale 212 umfasst.

Der Schweißbrenner 210 weist einen Brennertaster 222 auf, der an der Schweißbrenner-Griffschale 212 angeordnet ist. Durch Drücken bzw. Loslassen des Brennertasters 222 kann beispielsweise ein Kontakt geschlossen bzw. geöffnet werden, um einen Schweißvorgang zu starten oder zu beenden. Abhängig von der Konfiguration des Schweißbrenners 210 oder eines mit dem Schweißbrenner verbundenen Schweißgeräts können durch Betätigung des Brennertasters 222 auch weitere Funktionen gesteuert werden, zum Beispiel Schweißparameter eingestellt werden.

Die Schweißbrenner-Griffschale 212 weist eine zu der Montagekontur 106 korrespondierende Montagegegenkontur 224 auf, so dass der Pistolengriff 100 mit der Montagekontur 106 an der Montagegegenkontur 224 der Schweißbrenner-Griffschale 212 angesetzt werden kann.

Im Bereich der Montagegegenkontur 224 weist die Schweißbrenner-Griffschale 212 zu den ersten Befestigungselementen 122 korrespondierende erste Befestigungsgegenelemente 226 auf, die vorliegend als Achsen-Aufnahmen ausgebildet sind, in die die Achsenelemente 124 des Pistolengriffs 100 eingeführt werden können, so dass Pistolengriff 100 und Schweißbrenner-Griffschale 212 in einer Montagezwischenposition zueinander angeordnet sind. Fig. 2a zeigt den Pistolengriff 100 und den Schweißbrenner 210 in der Montagezwischenposition. Der Pistolengriff 100 ist in der Montagezwischenposition um die durch die Achsenelemente 124 definierte Achse zum Schweißbrenner 210 schwenkbar.

Durch Schwenken des Pistolengriffs 100 um die durch die Achsenelemente 124 verlaufende Achse können Pistolengriff 100 und Schweißbrenner 210 in die in Fig. 2b dargestellte Montageendstellung gebracht werden, in der der Haken 128 hinter die an der Schweißbrenner-Griffschale 212 vorgesehene Gegenfläche 228 einrastet, so dass der Pistolengriff 100 mit dem Schweißbrenner verbunden ist. Um das Einrasten des Hakens 128 zu erleichtern, weist der Haken eine schräge Gleitfläche 129 auf, die an der Schweißbrenner-Griffschale 212 unter elastischem Verbiegen des Hakens 128 abgleitet, bis der Haken 128 einrastet.

Die Achsenelemente 124 und der Haken 128 bilden Formschlusselemente 152 des Pistolengriffs 100 zu dessen formschlüssiger Befestigung am Schweißbrenner 210.

Auf diese Weise ist eine einfache und werkzeuglose Montage des Pistolengriffs 100 am Schweißbrenner 210 möglich.

In der Montageendstellung ist die Aktuatorfläche 148 gegenüber dem Brennertaster 222 angeordnet, so dass eine Betätigung des Brennertasterbetätigungshebels 144 an der Betätigungsfläche 146 eine Betätigung des Brennertaster 222 bewirkt.

Die Demontage des Pistolengriffs 100 kann ebenfalls werkzeuglos erfolgen, indem der Nutzer den Befestigungsbetätigungshebel 134 an der Betätigungsfläche 136 betätigt, wodurch der Haken 128 und die Gegenfläche 228 außer Eingriff gebracht werden und der Pistolengriff 100 zurück in die Montagezwischenstellung in Fig. 2a geschwenkt werden kann, aus der der Pistolengriff 100 durch Herausziehen der Achsenelemente 124 aus den Achsen-Aufnahmen 226 vom Schweißbrenner 210 getrennt werden kann.

Anstelle der Brennertasterbetätigung 140 kann am Pistolengriff auch ein Brennertaster vorgesehen sein, der elektrisch mit Kontaktierungsmitteln, zum Beispiel in Form zweier Kontaktstifte im Bereich der Montagekontur, verbunden ist. An der Schweißbrenner-Griffschale 212 können dann entsprechend komplementäre Kontaktierungsmittel, zum Beispiel in Form zweier Kontaktflächen im Bereich der Montagegegenkontur 224, angeordnet sein, die von den Kontaktierungsmitteln kontaktiert werden, wenn der Pistolengriff 100 sich in der Montageentstellung befindet. Bevorzugt ist jedoch die Brennertasterbetätigung 140, da sich der Pistolengriff 100 dann universeller für verschiedene Schweißbrenner 210 verwenden lässt.

Bei dem System 200 in Fig. 2a-b sind der Pistolengriff 100 und der Schweißbrenner 210 als separate Teile ausgebildet, die bedarfsweise miteinander verbunden werden können. Es ist weiterhin auch denkbar, dass der Pistolengriff 100 als fester Teil des Schweißbrenners ausgestaltet ist. Insbesondere kann der Pistolengriffkörper 104 einteilig mit der Schweißbrenner-Griffschale 212 ausgebildet sein. In diesem Fall kann anstelle der Brennertasterbetätigung 140 der Brennertaster 222 direkt am Pistolengriff 100 angeordnet werden. Ebenso kann auf die Befestigungsmittel 120 verzichtet werden.

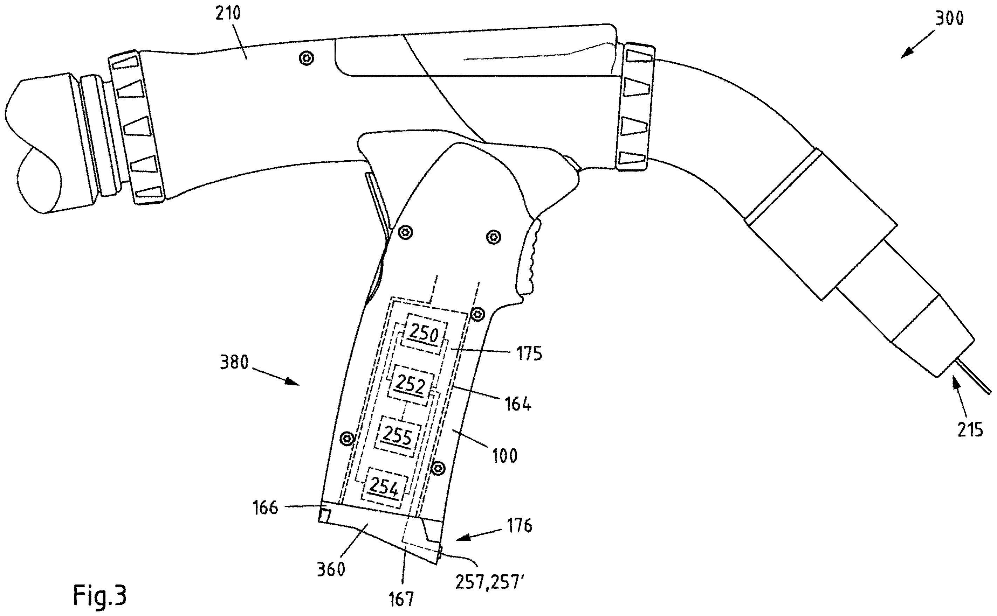

Die Fig. 3 zeigt ein weiteres Ausführungsbeispiel des Systems und des Funktionswechselmoduls in schematischer Ansicht von der Seite. Das System 300 umfasst den Schweißbrenner 210, den Pistolengriff 100 und das Funktionswechselmodul 360. Das System 300 unterscheidet sich vom System 200 demnach lediglich durch das andere Funktionswechselmodul 360. Einander entsprechende Komponenten sind in Fig. 1a-d, 2a-b und in Fig. 3 mit denselben Bezugszeichen versehen und es wird insoweit auf die obige Beschreibung Bezug genommen.

Das Funktionswechselmodul 360 unterscheidet sich dadurch vom Funktionswechselmodul 160, dass anstelle der Lichtquellen 256 ein Erfassungsgerät vorgesehen ist, bei dem es sich um ein Lesegerät 257 zum Lesen einer Kennung, beispielsweise um ein Barcodelesegerät oder ein RFID-Lesegerät, oder um ein optisches Erfassungsgerät 257' zum Erfassen eines Werkstücks, beispielsweise um einen 3D-Scanner handeln kann.

Das Erfassungsgerät 257 bzw. 257' ist so angeordnet, dass nach Montage des Pistolengriffs 100 am Schweißbrenner 210 und Montage des Funktionswechselmoduls 360 im Pistolengriff 100 die Scanrichtung des Lesegeräts 257 nach vorne in Richtung Auslass 215 des Schweißbrenners 210 gerichtet ist. Auf diese Weise kann ein Nutzer vor Beginn eines Schweißvorgangs insbesondere eine Information, wie eine Werkstück-Kennung oder Schweißparametervorgaben, am Werkstück auslesen. Handelt es sich bei dem Erfassungsgerät um einen RFID-Lesegerät, ist eine solche Ausrichtung entbehrlich.

Die Steuereinrichtung 252 ist vorzugsweise dazu eingerichtet, die Kommunikationseinrichtung 254 zu veranlassen, eine mit dem Lesegerät 257 bzw. dem optischen Erfassungsgerät 257' erfasste Information oder eine von der erfassten Information abhängige Information zu übermitteln, beispielsweise an eine Schweißstromquelle. Beispielsweise kann eine mit dem Lesergerät 257 erfasste Werkstück-Kennung übermittelt werden, so dass Schweißparameter automatisch für einen an dem Werkstück mit dieser Werkstück-Kennung durchzuführenden Schweißprozess eingestellt werden können.

Der Funktionswechselmodul 360 kann weiter einen Sensor 255 aufweisen, beispielsweise einen Temperatursensor, und die Steuereinrichtung 252 ist vorzugsweise dazu eingerichtet, die Kommunikationseinrichtung 254 zu veranlassen, mit dem Sensor 255 gemessene Messwerte oder eine von den gemessenen Messwerten abhängige Information zu übermitteln.

Die Spannungsversorgung 250, die Steuereinrichtung 252 und die Kommunikationseinrichtung 254 sowie das Lesegerät 257 bzw. das optische Erfassungsgerät 257' bzw. der Sensor 255 stellen eine Funktionseinheit 380 des Funktionswechselmoduls 360 dar, die den Pistolengriff 100 mit einer Zusatzfunktion, nämlich dem Auslesen und Übermitteln zum Beispiel von Kennungen, dem Erfassen und Übermitteln optischer Daten zum Beispiel eines Werkstücks bzw. dem Erfassen und Übermitteln von Sensordaten, ausstatten.

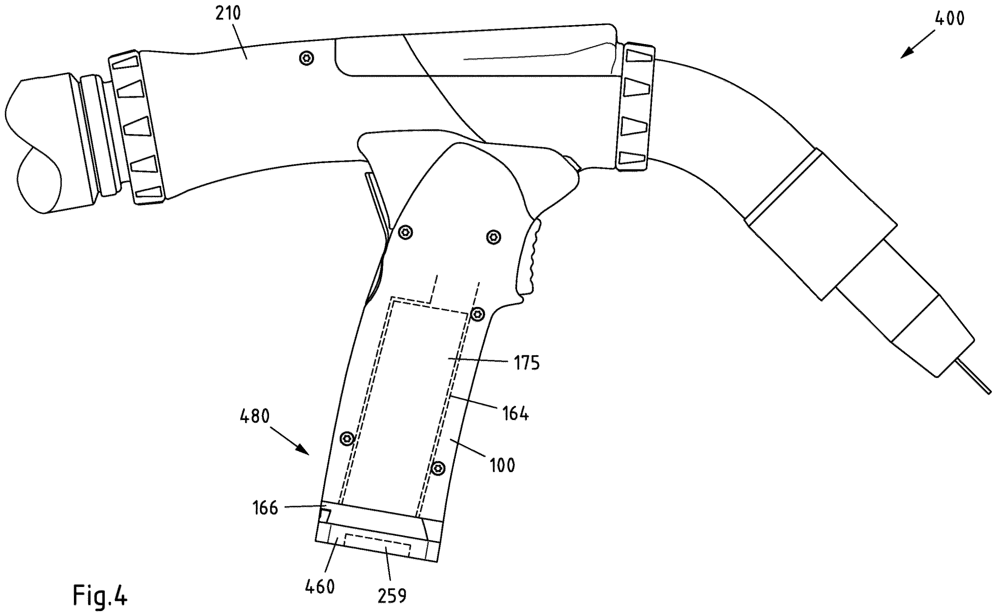

Die Fig. 4 zeigt ein weiteres Ausführungsbeispiel des Systems und des Funktionswechselmoduls in schematischer Ansicht von der Seite. Das System 400 umfasst den Schweißbrenner 210, den Pistolengriff 100 und das Funktionswechselmodul 460. Das System 400 unterscheidet sich vom System 200 demnach lediglich durch das andere Funktionswechselmodul 460. Einander entsprechende Komponenten sind in Fig. 1a-d, 2a-b und in Fig. 4 mit denselben Bezugszeichen versehen und es wird insoweit auf die obige Beschreibung Bezug genommen.

Das Funktionswechselmodul 460 unterscheidet sich dadurch vom Funktionswechselmodul 160, dass anstelle der Lichtquellen 256 ein Magnet 259 zur temporären Befestigung an einer magnetischen Oberfläche vorgesehen ist. Auf diese Weise kann ein mit dem Pistolengriff 100 ausgerüsteter Schweißbrenner 210 durch Einsetzen des Funktionswechselmoduls 460 bei Bedarf temporär an einer magnetischen Oberfläche, beispielsweise einer Stahlwand, befestigt werden. Dies erleichtert die Arbeit mit dem Schweißbrenner 210, da dieser zum Beispiel zwischen zwei Schweißvorgängen an einer in Griffweite befindlichen Oberfläche abgesetzt werden kann, so dass der Schweißer die Hände für andere Tätigkeiten frei hat.

Bei dem Magnet 259 kann es sich insbesondere um einen Permanentmagneten handeln.

Der Magnet 259 stellt eine Funktionseinheit 480 des Funktionswechselmoduls 460 dar, die den Pistolengriff 100 mit einer Zusatzfunktion, nämlich der Möglichkeit, den Pistolengriff bzw. den damit verbundenen Schweißbrenner temporär an einer magnetischen Oberfläche zu befestigen, ausstattet.

Weist das Funktionswechselmodul als Funktionseinheit lediglich einen Magneten auf, so sind die Spannungsversorgung 250, die Steuereinrichtung 252 und die Kommunikationseinrichtung 254 entbehrlich.

Es ist auch denkbar, ein Funktionswechselmodul mit mehreren Funktionen vorzusehen, beispielsweise mit Lichtquellen 256 und einem Lesegerät 257 oder mit einem Magneten 259 und Lichtquellen 256 bzw. einem Lesegerät 257.

### Bezugszeichenliste:

100 Pistolengriff
101, 200, 300, 400 System
   102 Halbschale
   104 Pistolengriffkörper
   106 Montagekontur
   108 Griffbereich
   110 Grifffläche
   112 Teilfläche
   114 Teilfläche
   116 Erhebungen
   117 Vertiefungen
   120 Befestigungsmittel
   122 erste Befestigungselemente
   124 Achsenelemente
   126 zweites Befestigungselement
   128 Haken
   129 Gleitfläche
   130 Befestigungsbetätigung
   132 Achse
   134 Befestigungsbetätigungshebel
   136 Betätigungsfläche
   138 Feder
   140 Brennertasterbetätigung
   142 Achse
   144 Brennertasterbetätigungshebel
   146 Betätigungsfläche
   148 Aktuatorfläche
   150 Feder
   152 Formschlusselemente
160, 360, 460 Funktionswechselmodul
   162 Funktionswechselmodul-Öffnung
   164 Funktionswechselmodul-Aufnahme
   166 Funktionswechselmodul-Deckel
   167 Gehäuseteil
   168 Funktionswechselmodul-Befestigungsmittel
   170 Haken
   172 Hinterschneidung
   174 Betätigungsfläche
   175 Schaft des Funktionswechselmoduls
   176 Kopf des Funktionswechselmoduls
180, 380, 480 Funktionseinheit
   200 System
   210 Schweißbrenner
   212 Griffschale
   214 Brennervorsatz
   215 Auslass
   216 vordere Seite
   218 Schlauchpaket
   220 hintere Seite
   222 Brennertaster
   224 Montagegegenkontur
   226 erste Befestigungsgegenelemente
   228 Gegenfläche
   250 Spannungsversorgung
   252 Steuereinrichtung
   254 Kommunikationseinrichtung
   255 Sensor
   256 Lichtquellen
   257 Lesegerät
   257' optisches Erfassungsgerät
   259 Magnet

## Patentansprüche

1. System (101, 200, 300, 400),
- umfassend einen Pistolengriff (100) für einen Schweißbrenner (210) und ein Funktionswechselmodul (160, 360, 460),
- wobei der Pistolengriff (100) einen Pistolengriffkörper (104) aufweist und
- wobei das Funktionswechselmodul (160, 360, 460) durch eine Funktionswechselmodul-Öffnung (162) im Pistolengriffkörper (104) in eine im Pistolengriffkörper (104) vorgesehene Funktionswechselmodul-Aufnahme (164) eingesetzt und/oder einsetzbar ist.

2. System nach Anspruch 1, weiter umfassend eine Schweißbrenner-Griffschale (212) und/oder einen Schweißbrenner (210), an dem der Pistolengriff (100) montierbar oder montiert ist.

3. System nach Anspruch 1 oder 2,
**dadurch gekennzeichnet, dass** der Pistolengriff (100) und das Funktionswechselmodul (160, 360, 460) komplementäre Funktionsmodul-Befestigungsmittel (168) aufweisen, die dazu ausgebildet sind, das Funktionswechselmodul (160, 360, 460) in der Funktionswechselmodul-Aufnahme (164) des Pistolengriffs (100) zu befestigen, insbesondere formschlüssig.

4. System nach einem der Ansprüche 1 bis 3, weiter umfassend ein oder mehrere weitere Funktionswechselmodule (160, 360, 460), die jeweils zum Einstecken in die Funktionswechselmodul-Aufnahme (164) ausgebildet ist, wobei das Funktionswechselmodul (160, 360, 460) und die ein oder mehreren weiteren Funktionswechselmodule (160, 360, 460) verschiedenartig ausgebildet sind, insbesondere verschiedenartige Zusatzfunktionen bereitstellen.

5. Funktionswechselmodul (160, 360, 460) für einen Pistolengriff (100) eines Schweißbrenners (210),
- mit einem Schaft (175) zum Einstecken in eine Funktionswechselmodul-Aufnahme (164) eines Pistolengriffs (100),
**dadurch gekennzeichnet,**
- **dass** das Funktionswechselmodul (160, 360, 460) eine Funktionseinheit (180, 380, 480) zur Ausstattung des Pistolengriffs (100) mit einer Zusatzfunktion aufweist.

6. System nach einem der Ansprüche 1 bis 4 oder
Funktionswechselmodul nach Anspruch 5,
**dadurch gekennzeichnet, dass** das Funktionswechselmodul (160, 360, 460) eine eigene Spannungsversorgung (250), insbesondere eine Batterie oder einen Akkumulator, aufweist.

7. System nach einem der Ansprüche 1 bis 4 oder 6 oder
Funktionswechselmodul nach Anspruch 5 oder 6,
**dadurch gekennzeichnet, dass** das Funktionswechselmodul (160, 360, 460) ein oder mehrere Lichtquellen (256), insbesondere LEDs, aufweist, die zur Ausleuchtung eines Arbeitsbereichs angeordnet sind, insbesondere eines Arbeitsbereichs des Schweißbrenners (210).

8. System nach einem der Ansprüche 1 bis 4, 6 oder 7 oder
Funktionswechselmodul nach einem der Ansprüche 5 bis 7,
**dadurch gekennzeichnet, dass** das Funktionswechselmodul (160, 360, 460) ein Lesegerät (257) zum Lesen einer Kennung aufweist, insbesondere einen Barcode- und/oder QR-Scanner oder ein RFID-Lesegerät.

9. System nach einem der Ansprüche 1 bis 4 oder 6 bis 8 oder Funktionswechselmodul nach einem der Ansprüche 5 bis 8,
**dadurch gekennzeichnet, dass** das Funktionswechselmodul (160, 360, 460) ein optisches Erfassungsgerät (257') zum Erfassen eines Werkstücks, insbesondere einen 3D-Scanner, aufweist.

10. System nach einem der Ansprüche 1 bis 4 oder 6 bis 9 oder Funktionswechselmodul nach einem der Ansprüche 5 bis 9,
**dadurch gekennzeichnet, dass** das Funktionswechselmodul (160, 360, 460) ein oder mehreren Sensoren (255) aufweist, insbesondere zur Erfassung von Messdaten in einem Arbeitsbereich, insbesondere eines Arbeitsbereichs des Schweißbrenners (210).

11. System nach einem der Ansprüche 1 bis 4 oder 6 bis 10 oder Funktionswechselmodul nach einem der Ansprüche 5 bis 10,
**dadurch gekennzeichnet, dass** das Funktionswechselmodul (160, 360, 460) eine Steuereinrichtung (252) zur Steuerung des Funktionswechselmoduls (160, 360, 460) und eine Kommunikationseinrichtung (254) zur drahtlosen Kommunikation umfasst, wobei die Steuereinrichtung (252) dazu eingerichtet ist, ein Senden von mit dem Funktionswechselmodul (160, 360, 460) erfassten Daten über die Kommunikationseinrichtung (254) zu veranlassen und/oder das Funktionswechselmodul (160, 360, 460) abhängig von über die Kommunikationseinrichtung (254) empfangenen Steuerbefehlen zu steuern.

12. System nach einem der Ansprüche 1 bis 4 oder 6 bis 11 oder Funktionswechselmodul nach einem der Ansprüche 5 bis 11,
**dadurch gekennzeichnet, dass** das Funktionswechselmodul (160, 360, 460) einen Magneten (259) aufweist, der dazu ausgebildet und angeordnet ist, den Pistolengriff (100) bei eingestecktem Funktionswechselmodul (160, 360, 460) an einem magnetischen Gegenstand zu halten.

13. Verwendung eines Funktionsmoduls (160, 360, 460) nach einem der Ansprüche 5 bis 12 zur Ausstattung eines Pistolengriffs (100) für einen Schweißbrenner (210) mit der Zusatzfunktion.
